# EUROPEAN PATENT SPECIFICATION

(11) **EP 1 873 969 B1**
(45) Date of publication and mention of the grant of the patent: **06.06.2012**
(21) Application number: 06116088.3
(22) Date of filing: 26.06.2006
(51) Int. Cl.: H04L 12/28, H04L 12/56, H04W 28/22

(54) **Limited-use data rates in a wireless local area network**
Datenraten mit beschränktem Gebrauch in einem drahtlosen lokalen Netzwerk
Taux de transmission de données à usage limité dans un réseau local sans fil

(43) Date of publication of application: 02.01.2008
(60) Divisional application: 11172378.9
(73) Proprietor: Research In Motion Limited, Waterloo, ON N2L 3W8 (CA); McMASTER UNIVERSITY, Hamilton, Ontario L8S 4L8 (CA)
(72) Inventor: Kezys, Vytas, Ancaster Ontario L9K 1M3 (CA); Todd, Terence Douglas, Hamilton Ontario L9C 2B4 (CA); Smadi, Mohammed N.A., Hamilton, Ontario L9A 5E3 (CA)
(74) Representative: Moore, Barry

(56) References cited:
- WO-A-01/11833
- US-A1- 2004 023 660

## Description

The invention generally relates to wireless local area networks (WLAN) and to cellular networks. In particular, embodiments of the invention relate to roaming of a dual-mode mobile communication device from a WLAN to a cellular network.

In accordance with the Institute of Electrical and Electronics Engineers (IEEE) 802.11 standards, wireless communication between a mobile station (STA) and an access point (AP) is possible at data rates that are predefined in the standards. IEEE standard 802.11b permits communication in 1, 2, 5.5 and 11 Mbps (Mega bits per second). IEEE standard 802.11a permits communication in 6, 9, 12, 18, 24, 36, 48 and 54 Mbps. IEEE standard 802.11g permits communication in any of the data rates defined in IEEE standard 802.11b and IEEE standard 802.11a, and dictates that support for 1, 2, 5.5, 11, 6, 12 and 24 Mbps is mandatory.

The intent behind multiple rates is to permit rate usage which best suits the current STA/AP link quality. Various factors may affect the quality of the link, for example, the distance between the STA and the AP, and increases of electromagnetic noise over the medium connecting the STA and the AP. As the quality of the link decreases, mobile stations will drop to lower rates, which require less signal-to-noise ratio (SNR) for reliable packet transmission performance. The link rate selection algorithm is not specified in IEEE 802.11 but is left up to vendor implementations.

In IEEE 802.11 the STA is responsible for triggering handoffs. A negative consequence of this is that a STA may continue to use a link and operate at data rates which are lower than what may be available should the STA handoff to a different AP. That is, in response to decreases in link quality, the station may continue to drop its data rate rather than to scan for an AP which could provide a higher rate link. When this is true the capacity of the network is affected since the station is continuing to use an unnecessarily low data rate.

To prevent capacity loss due to these effects, some APs prevent stations from communicating with them at data rates below certain specified site-dependent values, even though this contradicts the requirements of current IEEE 802.11 standards. STAs are forced to search for a better AP when these limits are reached. For example, in IEEE 802.11, an AP advertises supported data rates in its Beacon broadcasts. These rates are part of its "BSS Basic Rate Set". By specifying a minimum supported rate the AP can enforce a lower limit on the data rates used in its basic service set (BSS). This will help prevent the capacity-lowering behaviour discussed above. The minimum rate specified by the AP would typically be a function of the surrounding Wi-Fi coverage deployment, i.e., in a dense deployment where low quality links are rare, the minimum advertised data rate could be set higher than in a sparse deployment. The above mechanism is geared towards maintaining high capacity in heavy coverage situations.

However, when leaving the area covered by APs of a WLAN, a STA may not be able to find another WLAN to connect to. If the STA is capable also of cellular communication, it may search for a cellular base station and may connect to one if found. A handover from a WLAN to a cellular network may take quite some time, and the mobile station may lose the connection with the WLAN before establishing a connection with the cellular network. If the mobile station is involved in a real-time communication application, for example, a telephone conversation, the application may be interrupted.

US2004/0023660 discloses that network resources such as in a wireless system may be allocated to user devices on the network based upon at least one or more minimum user requirements being satisfied. A user may be determined as satisfied when minimum requirements of rate and delay are reached or maintained. The network may optimize throughput on the network by allowing a maximum number of users on the network to be satisfied. Users may be ranked according to signal quality, and network resources may be allocated to users according to rank to satisfy users until the resources of the network are allocated.

WO 01/11833 discloses a multichannel wireless network and methods for its operation. According to the described embodiments, at least two different types of wireless channels form the network infrastructure. A primary wireless channel is designed for relatively low bit rate, high reliability and network-wide communication. A secondary wireless channel is designed for relatively high bit rate communication, but with potentially lower reliability and shorter ranges. A base station uses the primary wireless channel to configure and control operation of the wireless network, including configuring pairs of devices as requested for direct communication over the secondary wireless channel.

### GENERAL

Preferably at least one issue taken into account in the present description is that strict enforcement of minimum data rates for communication between a STA and an AP can lead to disruptions in communication applications. Preferably in on aspect of the present invention an AP advertises a wider range of data rates with even lower minimum data rates and to permit, under certain conditions, a STA to communicate with the AP using one or more of the lower data rates advertised by the AP. The permission may be granted to a STA for a limited period of time. A non-exhaustive list of such conditions includes that the communications are of real-time data, that the STA has an active voice connection in progress, and that the STA is about to perform a handoff to another network, for example, a cellular network. An AP may advertise the lower data rates to STAs in its vicinity and may communicate with a STA over one or more of the lower data rates only if the STA cannot communicate with it over one of the higher data rates. An AP that permits a STA to communicate over one or more of the lower data rates may inform the STA that permission is granted and may inform the STA for how long the permission is granted. A STA may actively request an AP for permission to communicate with it over one or more of the lower data rates.

In a first aspect, the invention provides a method in a wireless access point, the method comprising: advertising data rates that are predefined in a wireless communication standard and are supported by said wireless access point for communication over a communication link; and permitting a mobile station to conduct communications with said access point over said communication link at one or more lower data rates of said advertised data rates only if said mobile station (54) satisfies one or more conditions.

In another aspect, the invention provides a method in a mobile station, the method comprising: signaling to an access point that a handoff of said mobile station from said access point to another type of network is imminent; and requesting from said access point permission to communicate with said access point at a limited-use supported data rate, wherein said limited-use supported data is predefined in a wireless communication standard and is supported by said wireless access point for communication over a communication link.

Other aspect and features of the invention will be apparent from the appended claims.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is an illustration of an exemplary communications system comprising a wireless local area network, a mobile station and a cellular base station, according to some embodiments of the invention;

Figure 2 shows an exemplary WLAN management frame according to some embodiments of the invention;

Figure 3 is a flowchart of an exemplary method for a WLAN access point to prepare and transmit the management frame of Figure 2, according to some embodiments of the invention;

Figure 4 is a flowchart of an exemplary simplified method for a WLAN access point, according to some embodiments of the invention; and

Figure 5 is a block diagram of an exemplary access point, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

Whilst there are a number of different wireless LAN architectures and the present invention is not limited to any particular one, the following description is generally written using the terminology applied in the ANSI/IEEE 802.11 Standards ("Wireless LAN Medium Access Control and Physical Layer Specifications"). It will be obvious to those of ordinary skill in the art how to modify the following for other existing WLAN standards or future related standards. It will also be obvious to those of ordinary skill in the art how to modify the following for other AP-STA protocols which achieve the same effect of data rate advertisement, such as information elements that are sent, for example, according to Cisco CCX (Cisco Compatible Extensions) procedures.

According to current IEEE 802.11 standards, an AP advertises its supported data rates in a Supported Rates Information Element (IE) and possibly also in an optional Extended Supported Rates IE, both of which are included in management frames. A non-exhaustive list of examples for management frames that include a Supported Rates IE includes probe requests, probe responses, authentication requests, authentication responses, association requests, association responses and beacon frames.

In some embodiments of the invention, violations of the AP's minimum advertised supported data rate are permitted under certain conditions. These violations will allow a STA to operate at link data rates that are lower than the minimum advertised supported data rate. The AP may place time constraints on how long a STA can operate the link at rates below the minimum advertised supported data rate. Once a STA starts operating the link at a rate below the minimum advertised supported data rate, the AP may signal to the STA how much time is left before the time constraint is reached.

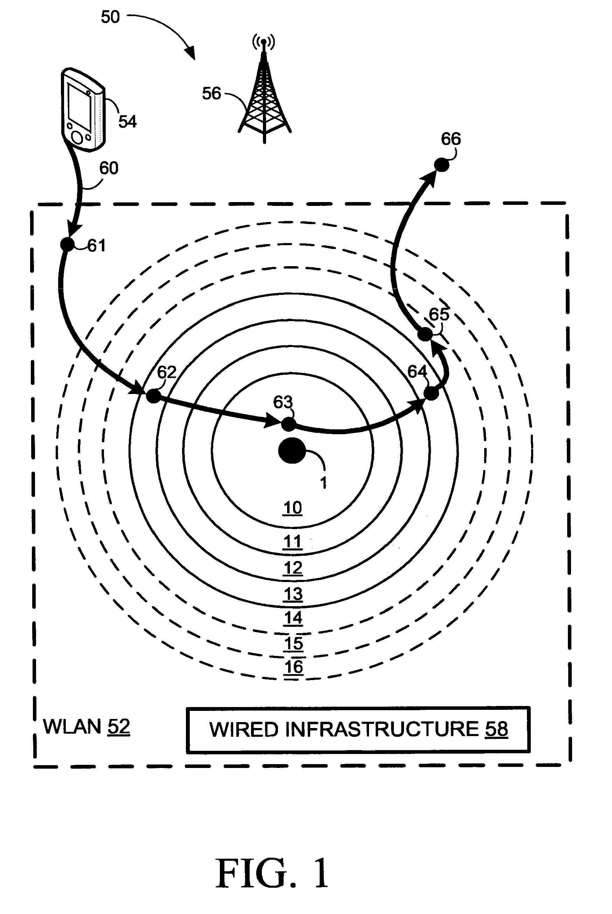

Figure 1 is an illustration of an exemplary communications system 50 comprising a WLAN 52, a mobile station 54 and a cellular communication base station 56. WLAN 52 comprises access points (APs), for example, AP 1. WLAN 52 comprises a wired infrastructure 58 to connect WLAN 52 to other networks (not shown).

APs of WLAN 52 may be connected to infrastructure 58 via wired and/or wireless links. WLAN 52, or parts of WLAN 52, may be a "mesh" WLAN, in which one or more APs are connected to infrastructure 58 indirectly through other APs. If WLAN 52 or part of WLAN 52 is a mesh WLAN, WLAN 52 may comprise one or more mesh points. Wired links, mesh points and APs other than AP 1 are not shown in Figure 1 so as not to obscure the description of the embodiments of the invention.

Station 54 is able to communicate with cellular communication base station 56 using one or more cellular communication standards. For simplicity of the explanation, cellular communication base station 56 provides a uniform cellular coverage for the area containing WLAN 52.

A non-exhaustive list of examples for standards with which base station 56 and mobile station 54 may comply comprises Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication.

The actual data rate at which an access point communicates with a mobile station is not higher than the supported data rates, and it generally declines as the distance of the mobile station from the access point increases. Moreover, the actual data rate generally declines as the electromagnetic interference at the vicinity of the access point increases. In a simplified manner, decreases in the feasible communication data rate are schematically illustrated in Figure 1 by concentric circles around AP 1.

In this example, AP 1 is compatible with 802.11g. AP 1 is programmed or hardwired so its supported data rates are 54, 48, 36, 24, 18, 12 and 11 Mbps. The feasible communication data rate of AP 1 within circle 10 is 54 Mbps. The feasible communication data rate of AP 1 within circular bands 11, 12, 13, 14, 15 and 16 is 48, 24, 11, 5.5, 2 and 1 Mbps, respectively.

If certain conditions are met, AP 1 may permit a mobile station to communicate with AP 1 for a limited duration of time at a data rate that is lower than the minimal data rate advertised in a Supported Rates IE, a Extended Supported Rates IE or any other similarly advertised IE. To that end, AP 1 may store in its memory identifications of one or more supported limited-use data rates, the one or more conditions to be met, and the permitted duration of time.

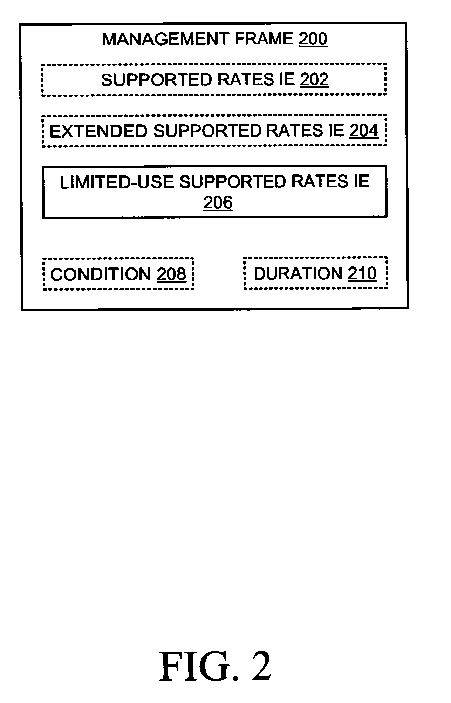

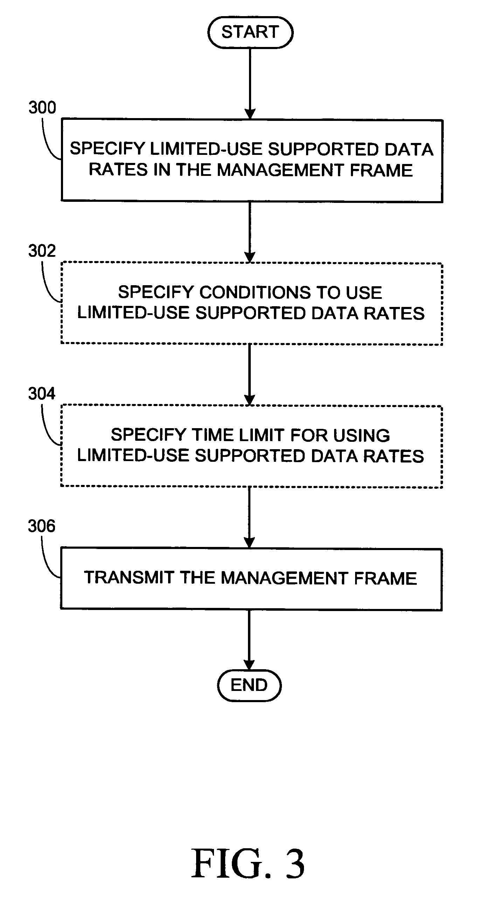

Figure 2 shows an exemplary management frame 200 of AP 1, according to embodiments of the invention, and Figure 3 shows a flowchart of an exemplary method for AP 1 to prepare and transmit management frame 200. Management frame 200 may optionally include a Supported Rates IE 202 in accordance with current or future IEEE 802.11 standards and may optionally include an Extended Supported Rates IE 204 in accordance with current or future IEEE 802.11 standards. Data rates 54, 48, 36, 24, 18, 12 and 11 Mbps may be identified by IE 202 and/or IE 204.

AP 1 may include in management frame 200 an IE 206 that specifies the supported limited-use data rates (300).

AP 1 may optionally specify in a field 208 of frame 200 the one or more conditions that must be met in order for a mobile station to use a limited-use data rate (302). AP 1 may optionally specify in a field 210 of frame 200 the duration of time for which the mobile station is permitted to use a limited-use data rate (304). AP 1 may transmit frame 200 (306).

Returning to Figure 1, station 54 is carried by a user along a trajectory 60 through locations 61-66. At location 61, station 54 cannot communicate with AP 1. Station 54 initiates a WLAN connectivity sequence in order to connect to an AP, however, it cannot find one. A WLAN connectivity sequence comprises probing, authentication and association, and may comprise other processes, for example, an IEEE 802.11X authentication process.

At location 62, station 54 completes a WLAN connectivity sequence with AP 1 and can communicate with AP 1 at an actual data rate that is not higher than 11 Mbps since location 62 is within circular band 13.

AP 1 may be configured, for example, with a supported limited-use data rate of 5.5 Mbps and a permitted duration of approximately 10 to 20 seconds. AP 1 may also be configured to grant permissions to communicate at supported limited-use data rates only to mobile stations that communicate real time data, for example, VoIP (voice over Internet protocol) and video streaming, and to provide that support only if the mobile stations are about to roam from WLAN 52 to a cellular network. AP 1 and station 54 may use signaling between them to verify whether roaming of station 54 from WLAN 52 to a cellular network is imminent. The time duration may be set to a value which would be sufficient for executing the handoff from the WLAN to the cellular network.

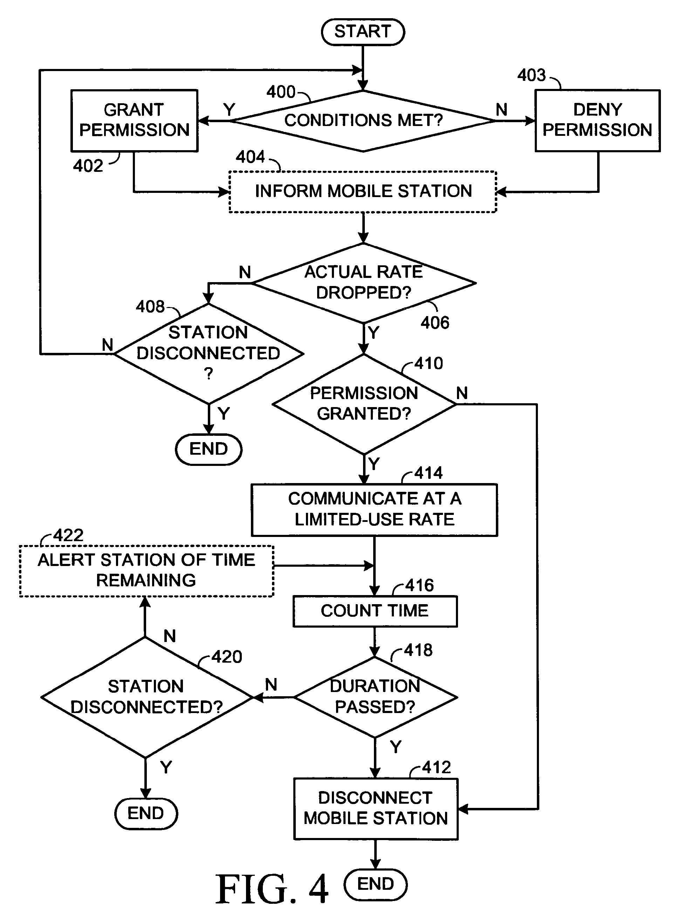

Reference is now made in addition to Figure 4, which shows a flowchart of an exemplary method for AP 1, according to embodiments of the invention. AP 1 may verify, for example, from signaling between AP 1 and station 54, whether the conditions to use limited-use data rates are met by station 54 (400). For example, AP 1 may recognize that station 54 is involved in a VoIP session through AP 1 and that roaming of station 54 from WLAN 52 to a cellular network is imminent.

If the conditions are met, AP 1 may grant permission to station 54 to communicate with AP 1 at a limited-used data rate (402) and may optionally inform station 54 of this (404). If the conditions are not met, AP 1 may deny station 54 permission to communicate with AP 1 at a limited-used data rate (403) and may optionally inform station 54 of this (404).

As long as the actual data rate is one that is indicated in IEs 202 and 204 or any other similarly advertised IE (406) and station 54 is connected to AP 1 (408), AP 1 may continue to check the conditions at 400, as the status may change. For example, while at location 62, station 54 may be involved in data communication and therefore, according to the example, AP 1 may deny station 54 permission to use limited-use data rates. However, at location 63 station 54 may be involved in a voice conversation and, according to the example, AP 1 may grant permission to station 54 to use limited-use data rates.

If station 54 disconnects from AP 1 (checked at 408), the method ends. While at location 64, station 54 and AP 1 may communicate frames of the voice conversation at a supported data rate that is no higher than 11 Mbps. At location 65, the feasible data rate drops to 5.5 Mbps and station 54 can communicate with AP 1 only at limited-use data rates. AP 1 recognizes that communication with station 54 is possible only at limited-use data rates (checked at 406), and AP 1 checks whether permission to use the limited-use data rates is currently granted or denied to station 54 (410).

If permission is currently denied, AP 1 may disconnect station 54 (412) and the method ends. If permission is currently granted, AP 1 communicates with station 54 at a limited-use data rate (414) and starts counting the duration of the communication at a limited-use data rate (416). Whether the duration of time for which station 54 is permitted to use a limited-use data rate has passed is checked (418), and if station 54 disconnects before the end of the permitted duration (420), the method ends. Otherwise, AP 1 may optionally alert station 54 of the permitted time remaining (422) and the method continues to 416. For example, AP 1 may transmit a frame directed to station 54 that comprises an indication of what remains of the duration of time. If the permitted duration of time for communication at a limited-use data rate has expired, AP 1 disconnects station 54 (412) and the method ends.

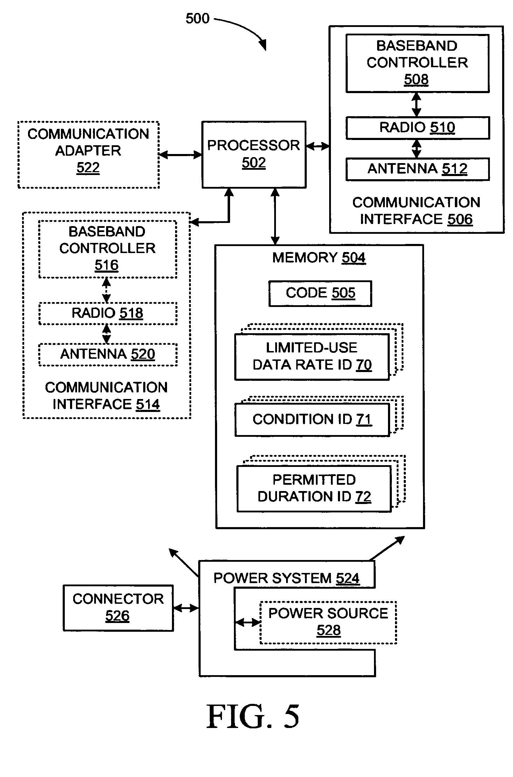

Figure 5 is a block diagram of an exemplary access point 500, according to some embodiments of the invention. AP 500 comprises a processor 502 and a memory 504 coupled to processor 502. Memory 504 comprises identifications 70, 71 and 72 of the one or more supported limited-use data rates, the one or more conditions and the permitted duration of time, respectively. Memory 504 also comprises code 505 that, when executed by processor 502, may implement the methods described herein.

AP 500 comprises a wireless communication interface 506, compatible with one or more standards of the family of IEEE 802.11 wireless communication standards. Wireless communication interface 506 is coupled to processor 502 and comprises at least a baseband controller 508, a radio 510, and an antenna 512.

AP 500 may optionally comprise an additional wireless communication interface 514, compatible with one or more standards of the family of IEEE 802.11 wireless communication standards. Wireless communication interface 514 is coupled to processor 502 and comprises at least a baseband controller 516, a radio 518, and an antenna 520. AP 500 may optionally comprise a wired communication adapter 522, for example, an Ethernet adapter.

By way of wireless communication interface 506 and/or wireless communication interface 514, AP 500 may be able to establish communication sessions with other devices, such as mobile stations and/or other access points.

AP 500 comprises a power system 524 and a connector 526 coupled to power system 524. AP 500 may optionally comprise a power source 528 coupled to power system 524. Connector 526 is connectable to an external power source (not shown) to provide power for charging power source 528 and/or for operating AP 500. Power system 524 provides electrical coupling between the external power source and power source 528, and provides electrical coupling between power source 528 and the electrical components of AP 500 (e.g. processor 502, memory 504, and the like). As part of the electrical coupling between the external power source and power source 528, power system 524 may control the charging of power source 528 with electrical charge drawn from the external power source.

A non-exhaustive list of examples for processor 502 includes any combination of microprocessors, microcontrollers, central processing units (CPU), digital signal processors (DSP), reduced instruction set computers (RISC), complex instruction set computers (CISC) and the like. Furthermore, processors 502 may comprise more than one processing unit, may be part of an application specific integrated circuit (ASIC) or may be a part of an application specific standard product (ASSP).

A non-exhaustive list of examples for memory 504 includes any combination of a) local memory, bulk storage, cache memory b) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like; c) optical devices, such as compact disk read only memory (CD ROM), and the like; and d) magnetic devices, such as a hard disk, a floppy disk, a magnetic tape, and the like.

A non-exhaustive list of examples for power source 528 includes one or more Ni-Cd (Nickel Cadmium) batteries, one or more Ni-MH (Nickel-Metal Hydride) batteries, one or more Lithium Ion batteries, one or more rechargeable Alkaline batteries, one or more capacitors, one or more super-capacitors, and any other suitable power source. A non-exhaustive list of examples for an external power source includes an AC power source, a DC power source, wind-power-conversion power source, solar-power-conversion power source.

A non-exhaustive list of examples for antennae 512 and 520 includes dipole antennae, monopole antennae, multilayer ceramic antennae, planar inverted-F antennae, loop antennae, shot antennae, dual antennae, omnidirectional antenna and any other suitable antennae.

A non-exhaustive list of examples for mobile station 54 includes a wireless-enabled laptop, a wireless-enabled cellphone, a wireless-enabled personal digital assistant (PDA), a wireless-enabled video camera, a wireless-enabled gaming console, a wireless Internet Protocol (IP) phone and any other suitable mobile station.

Although the example described above relates to a handoff of a mobile station from an IEEE 802.11 wireless network to a cellular network, embodiments of the invention are applicable to other situations in which a mobile station needs to communicate with an access point at a lower data rate than those advertised in the Supported Rates IE, Extended Supported Rates IE or any other similarly advertised IE. For example, the handoff may be to a non-cellular network. In another example, the handoff may be within an IEEE 802.11 WLAN but from an access point that is part of one Extended Service Set (ESS) to another access point that is part of a different ESS. The different ESS may be in a different IP subnetwork. Such a handoff may last up to several seconds, and it may be beneficial to extend the connection of the mobile station to the current access point.

## Claims

1. A method in a wireless access point (1, 500) belonging to a wireless local area network, the method comprising:
from a list of data rates that are supported by said wireless access point (1, 500), specifying a minimum data rate for advertisement in said wireless local area network;
advertising an indication of said minimum data rate;
reserving for limited use those of said supported data rates that are less than said minimum data rate for advertisement;
storing indications of one or more conditions to be satisfied by a mobile station (54) with which said wireless access point (1, 500) is communicating for use of said one or more supported data rates reserved for limited use; and
if an actual data rate of communication at which said wireless access point (1, 500) communicates with said mobile station (54) drops from any of said supported data rates that is greater than or equal to said minimum data rate to any of said supported data rates reserved for limited use and if said mobile station (54) satisfies at least one of said one or more conditions, permitting said mobile station to conduct communications with said wireless access point (1, 500) at one or more of said one or more supported data rates reserved for limited use for no more than a limited period of time, and
wherein said one or more conditions comprises that said mobile station (54) has an active real time connection in progress and/or that said mobile station (54) has an active voice connection in progress and/or that said mobile station (54) is about to perform a handoff to another network (56).

2. The method of claim 1 when said one or more conditions comprises that said mobile station (54) is about to perform said handoff to said other network (56), the method further comprising:
recognizing from signaling with said mobile station (54) that said mobile station (54) is about to perform said handoff.

3. The method of claim 1 or claim 2, further comprising:
specifying said one or more conditions in a management frame and transmitting said management frame in said wireless local area network, and/or monitoring whether said mobile station (54) meets said one or more conditions.

4. The method of claim 1 or claim 2, further comprising:
specifying said one or more supported data rates reserved for limited use in a management frame and transmitting said management frame in said wireless local area network.

5. The method of claim 1 or claim 2, further comprising:
specifying a duration of said limited period of time in a management frame and transmitting said management frame in said wireless local area network, and/or during said limited time period, informing said mobile station (54) how much time of said limited period of time remains.

6. The method of any one of claims 1 to 5, further comprising:
communicating with said mobile station at one or more of said supported data rates reserved for limited use when said mobile station is unable to communicate with said access point at any one of said advertised data rates.

7. The method of any one of claims 1 to 6, further comprising:
terminating communication with said mobile station (54) if said limited period of time has expired.

8. The method of any one of claims 1 to 6, further comprising:
setting a duration of said limited period of time to an amount of time that is sufficient for said mobile station (54) to perform a handoff from said access point (1, 500) to another network (56).

9. The method of claim 1 when said one or more conditions comprises that said mobile station (54) is about to perform said handoff to said other network (56) or claim 8, wherein said other network (56) is a cellular network.

10. The method of any one of claims 1 to 9, further comprising:
receiving a request from said mobile station (54) for permission to communicate with said access point (1, 500) at one of said supported data rates reserved for limited use; and
informing said mobile station (54) whether said permission has been granted.

11. A method in a mobile station (54), the method comprising:
receiving an advertisement from a wireless access point (1, 500) belonging to a wireless local area network, wherein said wireless access point (1, 500) has specified a minimum data rate for advertisement in said wireless local area network from a list of data rates that are supported by said wireless access point (1, 500), wherein said wireless access point has reserved for limited use those of said supported data rates that are less than said minimum data rate for advertisement, and wherein said advertisement includes an indication of said minimum data rate;
signaling to said wireless access point (1, 500) that a handoff of said mobile station (54) from said wireless access point (1, 500) to a network of a different type than the network to which said access point belongs is imminent; and
requesting from said wireless access point (1, 500) permission to communicate with said wireless access point (1, 500) at one of said one or more supported data rates reserved for limited use.

12. The method of claim 11, further comprising:
receiving from said wireless access point (1, 500) a management frame that specifies those of said supported data rates that are reserved for limited use.

13. The method of claim 11 or claim 12, wherein said network of said different type is a cellular network.

14. The method of any one of claims 11 to 13, further comprising:
receiving from said wireless access point (1, 500) permission to communicate with said wireless access point (1, 500) at one of said one or more supported data rates that are reserved for limited use; and
communicating with said wireless access point (1, 500) at one of said one or more supported data rates that are reserved for limited use.

15. A wireless access point (1, 500) comprising:
a wireless communication interface (506) through which said wireless access point (1, 500) is able to support a wireless local area network and to communicate with a mobile station;
a processor (502) coupled to said wireless communication interface (506); and
a memory (504) coupled to said processor (502),
wherein said wireless access point (1, 500) is to specify a minimum data rate for advertisement in said wireless local area network from a list of data rates that are supported by said wireless access point (1, 500), said wireless access point (1, 500) is to advertise an indication of said minimum data rate, and said wireless access point (1, 500) is to reserve for limited use those of said supported data rates that are less than said minimum data rate for advertisement, and
wherein said memory is to store indications (71) of one or more conditions to be satisfied by said mobile station (54) for use of said one or more supported data rates reserved for limited use, an indication (72) of a duration of a limited period of time, and executable code means (505) which, when executed by said processor (502), are arranged to permit said mobile station (54), if at least one of said one or more conditions is satisfied by said mobile station (54) and if an actual rate of communication at which said wireless access point (1, 500) communicates with said mobile station (54) drops from any of said supported data rates that is greater than or equal to said minimum data rate to any of said supported data rates reserved for limited use, to conduct communications with said wireless access point (1, 500) at one or more of said one or more supported data rates reserved for limited use for no more than said limited period of time, and
wherein said one or more conditions comprises that said mobile station (54) has an active real time connection in progress and/or that said mobile station (54) has an active voice connection in progress and/or that said mobile station (54) is about to perform a handoff to another network (56).

16. The wireless access point (1, 500) of claim 15, wherein said executable code means (505), when executed by said processor (502), are further arranged:
to recognize from a transmission received from said mobile station (54) via said interface (506) that at least one of said conditions is satisfied by said mobile station (54), prior to permitting said mobile station (54) to communicate with said wireless access point (1, 500) at said one or more supported data rates reserved for limited use for no more than said limited period of time, and/or
to transmit via said interface (506) a management frame having incorporated therein an indication of said one or more supported data rates reserved for limited use, and/or
to incorporate in said management frame an indication of said one or more conditions and/or an indication of said duration.

17. The wireless access point (1, 500) of claim 15 or claim 16, wherein said one or more supported data rates reserved for limited use, said one or more conditions and said duration are configurable.

18. A mobile station (54) comprising:
means for receiving an advertisement from a wireless access point (1, 500) belonging to a wireless local area network, wherein said wireless access point (1, 500) has specified a minimum data rate for advertisement in said wireless local area network from a list of data rates that are supported by said wireless access point (1, 500), wherein said wireless access point has reserved for limited use those of said supported data rates that are less than said minimum data rate for advertisement, and wherein said advertisement includes an indication of said minimum data rate;
means for signaling to said wireless access point (1, 500) that a handoff of said mobile station (54) from said wireless access point (1, 500) to a network of a different type than the network to which said access point belongs is imminent; and
means for requesting from said wireless access point (1, 500) permission to communicate with said wireless access point (1, 500) at one of said one or more supported data rates reserved for limited use.

19. The mobile station (54) of claim 18, further comprising:
means for receiving from said wireless access point a management frame that specifies those of said supported data rates that are reserved for limited use.

20. A computer program product comprising a machine readable medium embodying program code executable by a processor of a computing device or system for causing said computing device or system to implement the method of any one of claims 1 to 14.

21. A communication network comprising the wireless access point (1, 500) of any one of claims 15 to 17 and at least one mobile station (54) according to claim 18 or claim 19.

## Patentansprüche

1. Verfahren in einem drahtlosen Zugangspunkt (1, 500), der zu einem drahtlosen lokalen Netzwerk gehört, wobei das Verfahren aufweist:
aus einer Liste von Datenraten, die von dem drahtlosen Zugangspunkt (1, 500) unterstützt werden, Spezifizieren einer Minimum-Datenrate zur Ankündigung in dem drahtlosen lokalen Netzwerk;
Ankündigen einer Anzeige der Minimum-Datenrate;
Reservieren für eine eingeschränkte Nutzung diejenigen der unterstützten Datenraten, die geringer sind als die Minimum-Datenrate zur Ankündigung;
Speichern von Anzeigen von einer oder mehreren Bedingungen, die durch eine mobile Station (54), mit der der drahtlose Zugangspunkt (1, 500) kommuniziert, zu erfüllen sind zur Verwendung der einen oder mehreren unterstützten Datenraten, die für eine eingeschränkte Nutzung reserviert sind; und
wenn eine tatsächliche Kommunikationsdatenrate, mit der der drahtlose Zugangspunkt (1, 500) mit der mobilen Station (54) kommuniziert, von einer der unterstützten Datenraten, die größer oder gleich der Minimum-Datenrate sind, auf eine der unterstützten Datenraten fällt, die für eine eingeschränkte Nutzung reserviert sind, und wenn die mobile Station (54) zumindest eine der einen oder mehreren Bedingungen erfüllt,
Ermöglichen der mobilen Station, Kommunikationen mit dem drahtlosen Zugangspunkt (1, 500) mit einer oder mehreren der einen oder mehreren unterstützten Datenraten, die für eine eingeschränkte Nutzung reserviert sind, nicht länger als für eine begrenzte Zeitdauer zu führen, und
wobei die eine oder mehreren Bedingungen aufweisen, dass die mobile Station (54) eine laufende aktive Echtzeitverbindung hat und/oder dass die mobile Station (54) eine laufende aktive Sprachverbindung hat und/oder dass die mobile Station (54) kurz vor einem Durchführen einer Übergabe an ein anderes Netzwerk (56) ist.

2. Verfahren gemäß Anspruch 1, wenn die eine oder mehrere Bedingungen aufweisen, dass die mobile Station (54) kurz vor einem Durchführen der Übergabe an das andere Netzwerk (56) ist, wobei das Verfahren weiter aufweist:
Erkennen aus einer Signalisierung mit der mobilen Station (54), dass die mobile Station (54) kurz vor einem Durchführen der Übergabe ist.

3. Verfahren gemäß Anspruch 1 oder Anspruch 2, das weiter aufweist:
Spezifizieren der einen oder mehreren Bedingungen in einem Verwaltungsrahmen und Senden des Verwaltungsrahmens in dem drahtlosen lokalen Netzwerk und/oder Überwachen, ob die mobile Station (54) die eine oder mehreren Bedingungen erfüllt.

4. Verfahren gemäß Anspruch 1 oder Anspruch 2, das weiter aufweist:
Spezifizieren der einen oder mehreren unterstützten Datenraten, die für eine eingeschränkte Nutzung reserviert sind, in einem Verwaltungsrahmen und Senden des Verwaltungsrahmens in dem drahtlosen lokalen Netzwerk.

5. Verfahren gemäß Anspruch 1 oder Anspruch 2, das weiter aufweist:
Spezifizieren einer Dauer der begrenzten Zeitdauer in einem Verwaltungsrahmen und Senden des Verwaltungsrahmens in dem drahtlosen lokalen Netzwerk und/oder, während der begrenzten Zeitdauer, Informieren der mobilen Station (54), wie viel Zeit der begrenzten Zeitdauer verbleibt.

6. Verfahren gemäß einem der Ansprüche 1 bis 5, das weiter aufweist:
Kommunizieren mit der mobilen Station mit einer oder mehreren der unterstützten Datenraten, die für eine eingeschränkte Nutzung reserviert sind, wenn die mobile Station mit dem Zugangspunkt nicht mit einer der angekündigten Datenraten kommunizieren kann.

7. Verfahren gemäß einem der Ansprüche 1 bis 6, das weiter aufweist:
Beenden einer Kommunikation mit der mobilen Station (54), wenn die begrenzte Zeitdauer abgelaufen ist.

8. Verfahren gemäß einem der Ansprüche 1 bis 6, das weiter aufweist:
Setzen einer Dauer der begrenzten Zeitdauer auf eine Zeitdauer, die für die mobile Station (54) ausreichend ist, um eine Übergabe von dem Zugangspunkt (1, 500) zu einem anderen Netzwerk (56) durchzuführen.

9. Verfahren gemäß Anspruch 1, wenn die eine oder mehreren Bedingungen aufweisen, dass die mobile Station (54) kurz vor einem Durchführen der Übergabe an das andere Netzwerk (56) ist, oder Anspruch 8, wobei das andere Netzwerk (56) ein zellulares Netzwerk ist.

10. Verfahren gemäß einem der Ansprüche 1 bis 9, das weiter aufweist:
Empfangen einer Anforderung von der mobilen Station (54) für eine Erlaubnis, mit dem Zugangspunkt (1, 500) mit einer der unterstützten Daten zu kommunizieren, die für eine eingeschränkte Nutzung reserviert sind; und
Informieren der mobilen Station (54), ob die Erlaubnis erteilt wurde.

11. Verfahren in einer mobilen Station (54), wobei das Verfahren aufweist:
Empfangen einer Ankündigung von einem drahtlosen Zugangspunkt (1, 500), der zu einem drahtlosen lokalen Netzwerk gehört, wobei der drahtlose Zugangspunkt (1, 500) eine Minimum-Datenrate zur Ankündigung in dem drahtlosen lokalen Netzwerk aus einer Liste von Datenraten spezifiziert hat, die von dem drahtlosen Zugangspunkt (1, 500) unterstützt werden, wobei der drahtlose Zugangspunkt diejenigen der unterstützten Datenraten für eine eingeschränkte Nutzung reserviert hat, die geringer sind als die Minimum-Datenrate zur Ankündigung, und
wobei die Ankündigung eine Anzeige der Minimum-Datenrate umfasst; Signalisieren an den drahtlosen Zugangspunkt (1, 500), dass eine Übergabe der mobilen Station (54) von dem drahtlosen Zugangspunkt (1, 500) an ein Netzwerk eines anderen Typs als das Netzwerk, zu dem der Zugangspunkt gehört, bevorsteht; und
Anfordern von dem drahtlosen Zugangspunkt (1, 500) einer Erlaubnis, mit dem drahtlosen Zugangspunkt (1, 500) mit einer der einen oder mehreren unterstützten Datenraten zu kommunizieren, die für eine eingeschränkte Nutzung reserviert sind.

12. Verfahren gemäß Anspruch 11, das weiter aufweist:
Empfangen von dem drahtlosen Zugangspunkt (1, 500) eines Verwaltungsrahmens, der diejenigen der unterstützten Datenraten spezifiziert, die für eine eingeschränkte Nutzung reserviert sind.

13. Verfahren gemäß Anspruch 11 oder Anspruch 12, wobei das Netzwerk des anderen Typs ein zellulares Netzwerk ist.

14. Verfahren gemäß einem der Ansprüche 11 bis 13, das weiter aufweist:
Empfangen von dem drahtlosen Zugangspunkt (1, 500) einer Erlaubnis, mit dem drahtlosen Zugangspunkt (1, 500) mit einer der einen oder mehreren unterstützten Datenraten zu kommunizieren, die für eine eingeschränkte Nutzung reserviert sind; und
Kommunizieren mit dem drahtlosen Zugangspunkt (1, 500) mit einer der einen oder mehreren unterstützten Datenraten, die für eine eingeschränkte Nutzung reserviert sind.

15. Drahtloser Zugangspunkt (1, 500), der aufweist:
eine drahtlose Kommunikationsschnittstelle (506), über die der drahtlose Zugangspunkt (1, 500) ein drahtloses lokales Netzwerk unterstützen kann und mit einer mobilen Station kommunizieren kann;
einen Prozessor (502), der mit der drahtlosen Kommunikationsschnittstelle (506) gekoppelt ist; und
einen Speicher (504), der mit dem Prozessor (502) gekoppelt ist,
wobei der drahtlose Zugangspunkt (1, 500) vorgesehen ist zum Spezifizieren einer Minimum-Datenrate zur Ankündigung in dem drahtlosen lokalen Netzwerk aus einer Liste von Datenraten, die von dem drahtlosen Zugangspunkt (1, 500) unterstützt werden, wobei der drahtlose Zugangspunkt (1, 500) vorgesehen ist zum Ankündigen einer Anzeige der Minimum-Datenrate, und der drahtlose Zugangspunkt (1, 500) vorgesehen ist zum Reservieren für eine eingeschränkte Nutzung diejenigen der unterstützten Datenraten, die geringer sind als die Minimum-Datenrate zur Ankündigung, und
wobei der Speicher vorgesehen ist zum Speichern von Anzeigen (71) von einer oder mehreren Bedingungen, die durch die mobile Station (54) zu erfüllen sind, zur Verwendung der einen oder mehreren unterstützten Datenraten, die für eine eingeschränkte Nutzung reserviert sind, einer Anzeige (72) einer Dauer einer begrenzten Zeitdauer, und ausführbarer Codemittel (505), die bei Ausführung durch den Prozessor (502) ausgebildet sind, der mobilen Station (54) zu ermöglichen, wenn zumindest eine der einen oder mehreren Bedingungen durch die mobile Station (54) erfüllt ist und wenn eine tatsächliche Kommunikationsdatenrate, mit der der drahtlose Zugangspunkt (1, 500) mit der mobilen Station (54) kommuniziert, von einer der unterstützten Datenraten, die größer oder gleich der Minimum-Datenrate sind, auf eine der unterstützten Datenraten fällt, die für eine eingeschränkte Nutzung reserviert sind, Kommunikationen mit dem drahtlosen Zugangspunkt (1, 500) mit einer oder mehreren der einen oder mehreren unterstützten Datenraten, die für eine eingeschränkte Nutzung reserviert sind, nicht länger als für die begrenzte Zeitdauer zu führen, und
wobei die eine oder mehreren Bedingungen aufweisen, dass die mobile Station (54) eine laufende aktive Echtzeitverbindung hat und/oder dass die mobile Station (54) eine laufende aktive Sprachverbindung hat und/oder dass die mobile Station (54) kurz vor einem Durchführen einer Übergabe an ein anderes Netzwerk (56) ist.

16. Drahtloser Zugangspunkt (1, 500) gemäß Anspruch 15, wobei die ausführbaren Codemittel (505) bei Ausführung durch den Prozessor (502) weiter ausgebildet sind zum:
Erkennen aus einer Übertragung, die von der mobilen Station (54) über die Schnittstelle (56) empfangen wird, dass zumindest eine der Bedingungen von der mobilen Station (54) erfüllt wird, vor einem Ermöglichen der mobilen Station (54), mit dem drahtlosen Zugangspunkt (1, 500) mit einer oder mehreren unterstützten Datenraten, die für eine eingeschränkte Nutzung reserviert sind, nicht länger als für die begrenzte Zeitdauer zu kommunizieren, und/oder
Senden über die Schnittstelle (506) eines Verwaltungsrahmens, der darin eine Anzeige der einen oder mehreren unterstützten Datenraten enthalten hat, die für eine eingeschränkte Nutzung reserviert sind, und/oder Aufnehmen in dem Verwaltungsrahmen einer Anzeige der einen oder mehreren Bedingungen und/oder einer Anzeige der Dauer.

17. Drahtloser Zugangspunkt (1, 500) gemäß Anspruch 15 oder Anspruch 16, wobei die eine oder mehreren unterstützten Datenraten, die für eine eingeschränkte Nutzung reserviert sind, die eine oder mehreren Bedingungen und die Dauer konfigurierbar sind.

18. Mobile Station (54), die aufweist:
Mittel zum Empfangen einer Ankündigung von einem drahtlosen Zugangspunkt (1, 500), der zu einem drahtlosen lokalen Netzwerk gehört,
wobei der drahtlose Zugangspunkt (1, 500) eine Minimum-Datenrate zur Ankündigung in dem drahtlosen lokalen Netzwerk aus einer Liste von Datenraten spezifiziert hat, die von dem drahtlosen Zugangspunkt (1, 500) unterstützt werden, wobei der drahtlose Zugangspunkt diejenigen der unterstützten Datenraten für eine eingeschränkte Nutzung reserviert hat, die geringer sind als die Minimum-Datenrate zur Ankündigung, und
wobei die Ankündigung eine Anzeige der Minimum-Datenrate umfasst;
Mittel zum Signalisieren an den drahtlosen Zugangspunkt (1, 500), dass eine Übergabe der mobilen Station (54) von dem drahtlosen Zugangspunkt (1, 500) an ein Netzwerk eines anderen Typs als das Netzwerk, zu dem der Zugangspunkt gehört, bevorsteht; und
Mittel zum Anfordern von dem drahtlosen Zugangspunkt (1, 500) einer Erlaubnis, mit dem drahtlosen Zugangspunkt (1, 500) mit einer der einen oder mehreren unterstützten Datenraten zu kommunizieren, die für eine eingeschränkte Nutzung reserviert sind.

19. Mobile Station (54) gemäß Anspruch 18, die weiter aufweist:
Mittel zum Empfangen von dem drahtlosen Zugangspunkt eines Verwaltungsrahmens, der diejenigen der unterstützten Datenraten spezifiziert, die für eine eingeschränkte Nutzung reserviert sind.

20. Computerprogrammprodukt, das ein maschinenlesbares Medium aufweist, das Programmcode enthält, der durch einen Prozessor einer Computervorrichtung oder eines Computersystems ausgeführt werden kann, um die Computervorrichtung oder das Computersystem zu veranlassen, das Verfahren gemäß einem der Ansprüche 1 bis 14 zu implementieren.

21. Kommunikationsnetzwerk, das den drahtlosen Zugangspunkt (1, 500) gemäß einem der Ansprüche 15 bis 17 und zumindest eine mobile Station (54) gemäß Anspruch 18 oder Anspruch 19 aufweist.

## Revendications

1. Procédé exécuté sur un point d'accès sans fil (1, 500) appartenant à un réseau local sans fil, le procédé comprenant les étapes consistant à :
à partir d'une liste de débits de données qui sont supportés par ledit point d'accès sans fil (1, 500), spécifier un débit de données minimal à publier sur ledit réseau local sans fil ;
publier une indication dudit débit de données minimal ;
réserver à une utilisation limitée ceux desdits débits de données supportés qui sont inférieurs audit débit de données minimal à publier ;
stocker des indications d'une ou plusieurs conditions à satisfaire, par une station mobile (54) avec laquelle ledit point d'accès sans fil (1, 500) communique, pour pouvoir utiliser lesdits un ou plusieurs débits de données supportés qui sont réservés à une utilisation limitée ; et
si un débit réel de données de communication auquel ledit point d'accès sans fil (1, 500) communique avec ladite station mobile (54) chute de l'un quelconque desdits débits de données supportés qui sont égaux ou supérieurs audit débit de données minimal vers l'un quelconque desdits débits de données supportés qui sont réservés à une utilisation limitée et si ladite station mobile (54) répond à au moins une desdites une ou plusieurs conditions, autoriser ladite station mobile à réaliser des communications avec ledit point d'accès sans fil (1, 500) à un ou plusieurs desdits un ou plusieurs débits de données supportés qui sont réservés à une utilisation limitée, pendant au plus une période de temps limitée ; et
lesdites une ou plusieurs conditions comprenant le fait que ladite station mobile (54) possède une connexion active en temps réel qui est en cours et/ou que ladite station mobile (54) possède une connexion vocale active qui est en cours et/ou que ladite station mobile (54) est sur le point de réaliser un transfert vers un autre réseau (56) .

2. Procédé selon la revendication 1, dans lequel, lorsque lesdites une ou plusieurs conditions comprennent le fait que ladite station mobile (54) est sur le point de réaliser un transfert vers ledit autre réseau, le procédé comprend en outre l'étape consistant à :
reconnaître à partir de la signalisation avec ladite station mobile (54) que ladite station mobile (54) est sur le point de réaliser ledit transfert.

3. Procédé selon la revendication 1 ou la revendication 2, comprenant en outre les étapes consistant à :
spécifier lesdites une ou plusieurs conditions dans une trame de gestion et émettre ladite trame de gestion sur ledit réseau local sans fil et/ou surveiller si ladite station mobile (54) satisfait lesdites une ou plusieurs conditions.

4. Procédé selon la revendication 1 ou la revendication 2, comprenant en outre les étapes consistant à :
spécifier lesdits un ou plusieurs débits de données supportés qui sont réservés à une utilisation limitée dans une trame de gestion et émettre ladite trame de gestion sur ledit réseau local sans fil.

5. Procédé selon la revendication 1 ou la revendication 2, comprenant en outre les étapes consistant à :
spécifier une durée de ladite période de temps limitée dans une trame de gestion et émettre ladite trame de gestion sur ledit réseau local sans fil et/ou, pendant ladite période de temps limitée, informer ladite station mobile (54) du temps qui reste sur ladite période de temps limitée.

6. Procédé selon l'une quelconque des revendications 1 à 5, comprenant en outre l'étape consistant à :
communiquer avec ladite station mobile à un ou plusieurs desdits débits de données supportés qui sont réservés à une utilisation limitée lorsque ladite station mobile est incapable de communiquer avec ledit point d'accès à l'un quelconque desdits débits de données publiés.

7. Procédé selon l'une quelconque des revendications 1 à 6, comprenant en outre l'étape consistant à :
terminer la communication avec ladite station mobile (54) si ladite période de temps limitée a expiré.

8. Procédé selon l'une quelconque des revendications 1 à 6, comprenant en outre l'étape consistant à :
fixer une durée de ladite période de temps limitée à une longueur de temps qui est suffisante pour que ladite station mobile (54) réalise un transfert entre ledit point d'accès (1, 500) et un autre réseau (56).

9. Procédé selon la revendication 1, lorsque lesdites une ou plusieurs conditions comprennent le fait que ladite station mobile (54) est sur le point de réaliser ledit transfert vers ledit autre réseau (56), ou selon la revendication 8, dans lequel ledit autre réseau (56) est un réseau cellulaire.

10. Procédé selon l'une quelconque des revendications 1 à 9, comprenant en outre les étapes consistant à :
recevoir de ladite station mobile (54) une demande d'autorisation de communication avec ledit point d'accès (1, 500) à l'un desdits débits de données supportés qui sont réservés à une utilisation limitée ; et
informer ladite station mobile (54) que l'autorisation a été donnée ou non.

11. Procédé exécuté sur une station mobile (54), le procédé comprenant les étapes consistant à :
recevoir une publication d'un point d'accès sans fil (1, 500) appartenant à un réseau local sans fil, ledit point d'accès sans fil (1, 500) ayant spécifié un débit de données minimal à publier sur ledit réseau local sans fil, à partir d'une liste de débits de données qui sont supportés par ledit point d'accès sans fil (1, 500), ledit point d'accès sans fil ayant réservé à une utilisation limitée ceux desdits débits de données supportés qui sont inférieurs audit débit de données minimal à publier et ladite publication comprenant une indication dudit débit de données minimal ;
signaler audit point d'accès sans fil (1, 500) qu'un transfert de ladite station mobile (54) dudit point d'accès sans fil (1, 500) vers un réseau d'un type différent du réseau auquel appartient ledit point d'accès est imminent ; et
demander audit point d'accès sans fil (1, 500) une autorisation de communiquer avec ledit point d'accès sans fil (1, 500) à l'un desdits un ou plusieurs débits de données supportés qui sont réservés à une utilisation limitée.

12. Procédé selon la revendication 11, comprenant en outre l'étape consistant à :
recevoir dudit point d'accès sans fil (1, 500) une trame de gestion qui spécifie ceux desdits débits de données supportés qui sont réservés à une utilisation limitée.

13. Procédé selon la revendication 11 ou la revendication 12, dans lequel ledit réseau dudit type différent est un réseau cellulaire.

14. Procédé selon l'une quelconque des revendications 11 à 13, comprenant en outre les étapes consistant à :
recevoir dudit point d'accès sans fil (1, 500) une autorisation de communiquer avec ledit point d'accès sans fil (1, 500) à un desdits un ou plusieurs débits de données supportés qui sont réservés à une utilisation limitée ; et
communiquer avec ledit point d'accès sans fil (1, 500) à un desdits un ou plusieurs débits de données supportés qui sont réservés à une utilisation limitée.

15. Point d'accès sans fil (1, 500), comprenant :
une interface de communication sans fil (506) au travers de laquelle ledit point d'accès sans fil (1, 500) est en mesure de supporter un réseau local sans fil et de communiquer avec une station mobile ;
un processeur (502) couplé à ladite interface de communication sans fil (506) ; et
une mémoire (504) couplée audit processeur (502) ;
dans lequel ledit point d'accès sans fil (1, 500) est conçu pour spécifier un débit de données minimal à publier sur ledit réseau local sans fil, à partir d'une liste de débits de données qui sont supportés par ledit point d'accès sans fil (1, 500), ledit point d'accès sans fil (1, 500) est conçu pour publier une indication dudit débit de données minimal et ledit point d'accès sans fil (1, 500) est conçu pour réserver à une utilisation limitée ceux desdits débits de données supportés qui sont inférieurs audit débit de données minimal à publier ; et
dans lequel ladite mémoire est conçue pour stocker des indications (71) d'une ou plusieurs conditions à satisfaire par ladite station mobile (54) pour utiliser lesdits un ou plusieurs débits de données supportés qui sont réservés à une utilisation limitée, une indication (72) d'une durée de la période de temps limitée et des moyens de code exécutable (505) qui, lorsqu'ils sont exécutés par ledit processeur (502), sont conçus pour permettre à ladite station mobile (54), si au moins une desdites une ou plusieurs conditions est satisfaite par ladite station mobile (54) et si un débit réel de communication auquel ledit point d'accès sans fil (1, 500) communique avec ladite station mobile (54) chute de l'un quelconque desdits débits de données supportés qui sont égaux ou supérieurs audit débit de données minimal vers l'un quelconque desdits débits de données supportés qui sont réservés à une utilisation limitée, de réaliser des communications avec ledit point d'accès sans fil (1, 500) à un ou plusieurs desdits un ou plusieurs débits de données supportés qui sont réservés à une utilisation limitée, pendant au plus une période de temps limitée ; et
dans lequel lesdites une ou plusieurs conditions comprennent le fait que ladite station mobile (54) possède une connexion active en temps réel qui est en cours et/ou que ladite station mobile (54) possède une connexion vocale active qui est en cours et/ou que ladite station mobile (54) est sur le point de réaliser un transfert vers un autre réseau (56).

16. Point d'accès sans fil (1, 500) selon la revendication 15, dans lequel lesdits moyens de code exécutable (505), lorsqu'ils sont exécutés par ledit processeur (502), sont en outre conçus pour :
reconnaître à partir d'une émission reçue de ladite station mobile (54) via ladite interface (506) qu'au moins une desdites conditions est satisfaite par ladite station mobile (54) avant d'autoriser ladite station mobile (54) à communiquer avec ledit point d'accès sans fil (1, 500) auxdits un ou plusieurs débits de données supportés qui sont réservés à une utilisation limitée, pendant au plus ladite période de temps limitée ; et/ou
émettre via ladite interface (506) une trame de gestion dans laquelle est incorporée une indication desdits un ou plusieurs débits de données supportés qui sont réservés à une utilisation limitée ; et/ou
incorporer dans ladite trame de gestion une indication desdites une ou plusieurs conditions et/ou une indication de ladite durée.

17. Point d'accès sans fil (1, 500) selon la revendication 15 ou la revendication 16, dans lequel lesdits un ou plusieurs débits de données supportés qui sont réservés à une utilisation limitée, lesdites une ou plusieurs conditions et ladite durée sont configurables.

18. Station mobile (54), comprenant :
un moyen destiné à recevoir une publication d'un point d'accès sans fil (1, 500) appartenant à un réseau local sans fil, ledit point d'accès sans fil (1, 500) ayant spécifié un débit de données minimal à publier sur ledit réseau local sans fil, à partir d'une liste de débits de données qui sont supportés par ledit point d'accès sans fil (1, 500), ledit point d'accès sans fil ayant réservé à une utilisation limitée ceux desdits débits de données supportés qui sont inférieurs audit débit de données minimal à publier et ladite publication comprenant une indication dudit débit de données minimal ;
un moyen destiné à signaler audit point d'accès sans fil (1, 500) qu'un transfert de ladite station mobile (54) dudit point d'accès sans fil (1, 500) vers un réseau d'un type différent que le réseau auquel appartient ledit point d'accès est imminent ; et
un moyen destiné à demander audit point d'accès sans fil (1, 500) une autorisation de communiquer avec ledit point d'accès sans fil (1, 500) à l'un desdits un ou plusieurs débits de données supportés qui sont réservés à une utilisation limitée.

19. Station mobile (54) selon la revendication 18, comprenant en outre :
un moyen destiné à recevoir dudit point d'accès sans fil (1, 500) une trame de gestion qui spécifie ceux desdits débits de données supportés qui sont réservés à une utilisation limitée.

20. Progiciel d'ordinateur comprenant un support lisible par la machine qui matérialise un code de programme pouvant être exécuté par un processeur d'un dispositif ou système informatique afin de commander audit dispositif ou système informatique de mettre en oeuvre le procédé selon l'une quelconque des revendications 1 à 14.

21. Réseau de communication comprenant le point d'accès sans fil (1, 500) selon l'une quelconque des revendications 15 à 17 et au moins une station mobile (54) selon la revendication 18 ou la revendication 19.
